# EUROPÄISCHE PATENTSCHRIFT

(11) **EP 0 330 229 B1**
(45) Veröffentlichungstag und Bekanntmachung des Hinweises auf die Patenterteilung: **05.01.1994**
(21) Anmeldenummer: 89103300.3
(22) Anmeldetag: 24.02.1989
(51) Int. Cl.: F16P 3/08, H01H 27/00

(54) **Verriegelungsvorrichtung**
Locking device
Dispositif de verrouillage

(30) Priorität: 26.02.1988 DE 3806189
(43) Veröffentlichungstag der Anmeldung: 30.08.1989
(73) Patentinhaber: Elan Schaltelemente GmbH, D-35435 Wettenberg (DE)
(72) Erfinder: Willems, Jürgen, D-4000 Düsseldorf-Eller (DE); Popella, Rudolf, D-4000 Düsseldorf 13 (DE)
(74) Vertreter: Stoffregen, Hans-Herbert, Dr. Dipl.-Phys.

(56) Entgegenhaltungen:
- EP-A- 0 184 033
- DE-A- 3 710 079
- DE-C- 3 430 090
- DE-U- 8 716 018

## Beschreibung

Die Erfindung bezieht sich auf eine Verriegelungsvorrichtung, insbesondere ein Sicherheitsverriegelungsschalter, umfassend einen Magneten mit einem auf ein als Stellglied ausgebildetes Verriegelungselement einwirkenden Anker und einem einen Positionsschalter betätigenden einen Stößelkopf aufweisenden Stößel, der mit dem Stellglied wechselwirkt und in Abhängigkeit von dessen Stellung den Positionsschalter geschlossen oder geöffnet hält, wobei das Stellglied durch ein in einen Schlitz eines das Stellglied zumindest teilweise aufnehmden Gehäusekopfes verschiebbares Betätigungsorgan positionsveränderbar ist und wobei das Stellglied ein zwei stationäre Endpositionen einnehmbares exzentrisch gelagertes und zwei zueinander beabstandete Rastnasen autweisendes Umlenkteil mit zwei gegeneinander geneigten Anlageflächen für den Stößelkopf ist, wobei der Stößel von einem den Magneten und den Positionsschalter aufnehmenden Gehäuse ausgeht.

Verriegelungsvorrichtungen werden zur Absicherung von z. B. Maschinen- und Anlagentüren, insbesondere bei automatischen Funktionsabläufen eingesetzt. Die Wirkungsweise entsprechender Verriegelungen wird insbesondere bei Werkkzeugmaschinen ersichtlich, die zum Schutz zum einen der daran arbeitenden Personen und zum anderen gegen eine unsachgemäße Unterbrechung des Fertigungsablaufes mit einem Gitter oder Gehäuse versehen sind. Nach jedem Bearbeitungsprozeß wie z.B. einer spanabhebenden Formgebung eines Werkstückes durch die Maschine wird die Tür des Gitters bzw. des Gehäuses geöffnet und das fertige Werksstück wird von Hand herausgenommen. Sodann wird ein zu bearbeitendes neues Werkstück eingesetzt. Bei diesen Maßnahmen soll sichergestellt sein, daß die Tür des Schutzgitters von dem Stillstand der Maschine nicht geöffnet und die Maschine selbst bei noch geöffneter Tür nicht wieder angefahren werden kann.

Mit anderen Worten sollen entsprechende Verriegelungsvorrichtungen folgende Maßnahmen sicherstellen.
- Die zu sichernde Maschine oder Vorrichtung kann nur bei geschlossener Tür in Betrieb genommen werden (sogenannte gefährliche Bewegung).
- Während der gefährlichen Bewegung ist das Öffnen der Tür nicht möglich,
- nach Stillsetzung der gefährlichen Bewegung wird das Öffnen der Tür ermöglicht bzw. die Verriegelung aufgehoben und
- ein Wiedereinschalten bei geöffneter Tür ist nicht möglich.

In Abhängigkeit von der Betätigungsart des den Verriegelungsschieber beeinflussenden Magneten gibt es eine Federkraft- und eine Magnetkraft-Verriegelung. Bei der Magnetkraft-Verriegelung erfolgt im stromführenden Zustand des Magneten eine Verriegelung, wohingegen im stromlosen Zustand eine Entriegelung erfolgt. Bei der Federkraft-Verriegelung ist eine Entriegelung nur im stromführenden Zustand des Magneten möglich, wohingegen die Türverriegelung allein durch Federkraft erfolgt, so daß bei Leitungsunterbrechung oder Stromausfall stets ein gefahrloser Zustand gewährleistet ist.

Bekannte Verriegelungsvorrichtungen weisen auf dem die Positionsschalter und den Magneten aufnehmenden Gehäuse einen Umlenk- und einen Verriegelungskopf auf, die parallel oder hintereinander von einem auch als Schlüssel zu bezeichnenden Betätigungsorgan durchfahren werden, um einen Sicherheitsgrenztaster oder -schalter zu betätigen und den Verriegelungsbolzen in das Betätigungsorgan eingreifen zu lassen, wodurch die Verriegelung erfolgt. Hierdurch bedingt ist ein recht voluminöser Aufbau erforderlich, bei dem das flächig ausgebildete Betätigungsorgan bedingt durch das Eingreifen sowohl in den Verriegelungs- als auch in den Umlenkkopf eine Größe aufweist, die ein häufiges Verbiegen und Beschädigen mit sich bringt.

Eine Verriegelungsvorrichtung der eingangs beschriebenen Art ist der EP-A 0 184 033 zu entnehmen, die funktionsbedingt zwingend einen Verriegelungskopf und einen Stößelkopf aufweist.

Aus der DE-C-34 30 090 ist ein Sicherheitsschalter bekannt, bei dem das Stellglied der Stößel selbst ist. Um das Stellglied und damit den Stößel verschieben zu können, muß das Betätigungsorgan eine rampenförmige Stirnfläche und das Stellglied ein ballig geformtes Endstück aufweisen. Zwischen dem den Positionsschalter aufnehmenden Gehäuseunterteil und einem das Stellglied aufweisenden Gehäuseoberteil ist ein entfernbares Gehäusezwischenteil mit dem Magneten angeordnet. In dem Gehäusezwischenteil ist ferner ein den Stößel aufnehmendes Zwischenglied mit einer Ausnehmung vorhanden, in die ein Verriegelungszapfen formschlüssig eingreift, dessen Längsachse mit der des Ankers übereinstimmt. Hierdurch bedingt sind erhebliche Magnetkräfte erforderlich, um bei Krafteinwirkung auf das Stellglied den Anker verschieben zu können. Durch die Dreiteiligkeit des aus Ober-, Zwischen- und Unterteil bestehenden Gehäuses sind insbesondere bei einem Einsatz in feuchten Räumen unerwünschte aufwendige Dichtungsmaßnahmen erforderlich. Auch ist durch die entlang einer Achse verlaufende Baueinheit wie Stößel, Zwischenglied und Schalterbetätigungsglied ein relativ langgestrecktes Gesamtgehäuse erforderlich.

Aufgabe der vorliegenden Erfindung ist es unter anderem, eine Verriegelungsvorrichtung der eingangs genannten Art so auszubilden, daß eine kompakte Baugröße unter Sicherstellung sämtlicher zwangsläufig und/oder überwachter Funktionsabläufe ein Verriegeln und Betätigen der für die Steuerung erforderlichen Überwachungsschalter möglich ist, wobei ein weitgehend manipulationssicheres Betätigen des Stellglieds möglich sein soll, ohne daß ein aufwendiger und gegebenenfalls zu Störungen führender Aufbau erforderlich ist. Auch soll die Möglichkeit einer Notentriegelung geschaffen werden, die jedoch nach deren Aktivierung nicht ohne weiteres aufhebbar ist. Schließlich sollen keine aufwendigen elektronischen Schaltungen für die Betätigung des Elektromagneten erforderliclh sein, über den eine sichere Verriegelung auch bei kleiner Baugröße zu gewährleisten ist.

Die Aufgabe wird erfindungsgemäß dadurch gelößt, daß der Stößel von einem verschiebbar angeordneten Aufnahmeelement ausgeht, das eine Ausnehmung aufweist, in die ein Sperrschieber zum Blockieren einer Stößelbewegung formschlüssig einbringbar ist, und wobei die Schiebeachse des Sperrschiebers versetzt zu der Ankerlängsachse verläuft. Dieser ist nach einer Ausführungsform der Erfindung mit dem Anker über ein Winkelelement verbunden, dessen einer Schenkel der Sperrhebel selbst ist und seitlich geführt entlang der Innenfläche wie dem Gehäuseboden verschiebbar ist. Selbstverständlich kann das Aufnahmeelement auch Teil des Stößels sein.

Durch die erfindungsgemaße Lehre weist das vorzugsweise aus Kunststoff bestehende und voll isoliert und öl- und wasserdicht aufgebaute Gehäuse nur zusätzlich einen Kopf auf, in dem das Betätigungsorgan eingreift. Der Kopf kann dabei Teil des Gehäuses, vorzugsweise jedoch ein lösbares Teil sein. In dem Gehäusekopf ist das an und für sich bekannte eine U-Form aufweisende Stellglied angeordnet. An dem um eine senkrecht zum Hubweg des Betätigungsorgans verschwenkbaren Stellglied, und zwar an dessen Außenfläche, stützt sich der Stößel ab, um sowohl die für den Stromkreis zum Betätigen der zu verriegelnden Vorrichtung bzw. Maschine erforderliche Überwachungsschalter zu betätigen als auch die Verriegelung einer Tür eines Gitters oder ähnliches herbeizuführen. Hierdurch ergibt sich hinsichtlich des Betätigungsorgan der Vorteil, daß dieses im Vergleich zu denjenigen, die sowohl -sei es parallel, sei es in Reihe- einen Umlenkkopf als auch einen Verriegelungskopf durchdringen müssen, klein ausgebildet ist. Infolgedessen ist die Gefahr von einem Verbiegen bzw. Beschädigen des auch als Schlüssel zu bezeichnenden Betätigungsorgans weitgehend ausgeschlossen, so daß eine wartungsarme Betriebsweise gegeben ist. Um das u.a. den Magneten, den Stößel, den Schalter und das Aufnahmeteil aufnehmende Gehäuse öl- und wasserdicht auch im Bereich des Stößeldurchtritts auszubilden, ist dieser von einem von dem Gehäuse ausgehenden Dichtelement wie Dichtbalg umgeben, der unterhalb des Stößelkopfes in einer umlaufenden Nut befestigt ist.

Der an der dem Gehäuse zugewandten Außenseite des Stellgliedes anliegende Stößel wird von einer vorzugsweise aus Kunststoff bestehenden Halterung aufgenommen, in die formschlüssig der Sperrschieber eingreift. Da der seitlich geführte Sperrschieber in einer zu der Ebene der Längsachse des Ankers versetzten Ebene in Ein- bzw. Ausgriff mit der Stößelhalterung gelangt, sind relativ geringe Ver- bzw. Entriegelungskräfte des Magneten erforderlich, so daß eine aufwendige elektronische Beschaltung entfällt. Es kann folglich ein üblicher Gleichspannungsmagnet mit 100 % ED eingesetzt werden.

Die erfindungsgemäße Verriegelungsvorrichtung kann den Anforderungen entsprechend als magnet- oder federkraft-verriegelte Ausführungsform zur Verfügung gestellt werden. Bei der Ausführung mittels Federkraft erfolgt die Verriegelung selbsttätig beim Schließen der Tür. Hierbei wird der sich in Richtung des Sperrschiebers erstreckende Ankerabschnitt von einem Federelement umfaßt, bei dem vorzugsweise der Abstand der Windungen kleiner ist als der Drahtdurchmesser. Hierdurch ist bei einem eventuellen Federbruch sichergestellt, daß die Federfunktion erhalten bleibt, also die zu verriegelnde Tür gegebenenfalls in der geschlossenen Stellung verharrt. Die Entriegelung erfolgt dann über einen Magnetimpuls im Rahmen der Maschinensteuerung. Entsprechend umgekehrt verläuft die Magnetkraft-Verriegelung, bei der die Verriegelung durch Stromfluß durch den Magneten erfolgt und das Entriegeln mittels einer auf den Anker oder auf einen mit diesem verbundenen Element wirkenden Feder bei stromlosem Magneten hervorgerufen wird.

In Ausgestaltung der Erfindung ist das Betätigungsorgan innerhalb des Schlitzes z.B. durch federvorgespannte Kugelelemente lagerfixierbar, die in entsprechend geformte Einbuchtungen in den Seitenlängsrändern des Betätigungsorgans eingreifen. Hierdurch ist die Möglichkeit gegeben, daß trotz eines erheblichen Spiels zwischen dem Schlitz und dem Betätigungsorgan dieses in einem Umfang festlegbar ist, daß bei Magnetkraft-Verriegelung der Sperrschieber in die zugeordnete Aussparung am Stößel bzw. der diesen aufnehmenden Halterung eingreifen kann.

In weiterer Ausgestaltung ist das Stellglied von zwei Sperrelementen erfaßbar, die jeweils eine zu der Schlitzöffnung hin gerichtete Schrägfläche aufweisen, entlang derer das Betätigungsorgan derart gleitet, daß das Sperrelement aus dem Schwenkweg des Stellgliedes entfernbar ist. Dabei verlaufen die Schrägflächen aufeinanderzu und weisen in ihrem hinteren Bereich parallel verlaufend zur Betätigungsorganbewegungsrichtung Abschrägungen auf, die vorzugsweise von diametral gegenüberliegenden Bereichen der Sperrelemente ausgehen.

Des weiteren ist bei einer Ausführungsform der Erfindung vorgesehen, daß der Schlüssel eine zusätzliche Codierung aufweist, die es ermöglicht, daß ein Einschieben in den Schlitz in dem Umfang erfolgt, daß das als Exzenter ausgebildete Stellglied in die Endposition verschwenkt wird, in der über den Stößel zum einen die Sicherheitsschalter für den Stromkreis der zu sichernden Maschine bzw. Vorrichtung geschlossen und zum anderen mittelbar oder unmittelbar in den Stößel der Sperrschieber eingreift. Ein Teil dieser Codierung befindet sich in der trichterförmigen Einlaßöffnung des Schlitzes und wird durch eine Strukturierung hervorgerufen, die komplementär in einem keilförmigen Bereich des Betätigungsorgans vorhanden ist, der in dem Abstand zu seinem freien Ende verläuft, der es gestattet, daß im zuvor beschriebenen Sinne ein Verschwenken des Stellglieds, also des mit dem Stößel wechselwirkenden Umlenkelements erfolgt. Die Strukturierung kann dabei über Nocken und Nuten oder Stifte und Bohrungen oder andere gleichwirkende Elemente erfolgen.

Um insbesondere bei der federkraftverriegelnden Ausführungsform die Blockierung des Stößels aufzuheben, kann nach einer weiteren Ausführungsform eine Notentriegelung vorgesehen sein, die dadurch gebildet wird, daß von dem dem Stößel abgewandter Ankerabschnitt ein z.B. rohrförmiges Element wie Zugstange ausgeht, die außerhalb des Gehäuses als Handhabe erfaßbar ist. Mit diesem Element wirkt ein federvorgespanntes Rastelement zusammen, das dann in eine zugeordnete Ausnehmung eingreift, wenn die Handhabe zunächst erfaßt und somit der Anker und der mit diesem verbundene Sperrschieber in Ausgriff mit dein Stößel bzw. dem diesen aufnehmenden Element gelangt und dann wieder losgelassen wird. Auf das mit dem Anker vorzugsweise schwimmend verbundene Zugelement wirkt nämlich eine zum Magneten hin gerichtete Federkraft ein, so daß das Zugelement in die Ausgangsposition zurückgelangen will. Das Rastelement verhindert jedoch ein vollständiges Zurückfahren. Vielmehr rastet das Zugelement in einer Position ein, in der der Sperrschieber entriegelt ist, wodurch zwangsläufig der Überwachungskontakt des Magneten und damit ein Sicherheitsstromkreis unterbrochen wird. Dieser Überwachungskontakt ist vorzugsweise auf der dem Stößel gegenüberliegenden Seite des Magneten als eine fest mit dem Anker in Verbindung stehende und von diesem schaltbare doppelseitige Kontaktbrücke ausgebildet. Die Aufhebung dieser Einrastung kann nach einem weiteren Vorschlag der Erfindung nur mittels eines speziellen Schlüssels erfolgen, so daß durch das Betätigen der Notentriegelung eine "Überlistung" der Verriegelungsvorrichtung nicht erfolgen kann.

Weitere Einzelheiten, Vorteile und Merkmale der Erfindung ergeben sich nicht nur aus den Ansprüchen und den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Draufsicht einer erfindungsgemäßen Verriegelungsvorrichtung mit entferntem Gehäusedeckel und Gehäusekopf,
- Fig. 2: einen Längsschnitt durch die Vorrichtung gemäß Fig. 1,
- Fig. 3: eine Detaildarstellung eines Ausschnittes eines in drei um 90° zueinander versetzte Positionen an dem Gehäuse der Verriegelungsvorrichtung nach Fig. 1 und 2 befestigbaren Gehäusekopfes,
- Fig. 4: eine Schnittdarstellung durch den Gehäusekopf entlang der Linie IV-IV,
- Fig. 5: eine Schnittdarstellung durch den Gehäusekopf entlang der Linie V-V,
- Fig. 6: eine Vorderansicht einer weiteren Ausführungsform eines Gehäusekopfes,
- Fig. 7: eine Schnittdarstellung durch den Gehäusekopf entlang der Linie VII-VII in Fig. 6,
- Fig. 8: eine Schnittdarstellung durch den Gehäusekopf der Fig. 7 entlang der Linie VIII-VIII,
- Fig. 9: eine Schnittdarstellung durch den Gehäusekopf der Fig. 8 entlang der Linie IX-IX mit zugeordnetem Betätigungsorgan und
- Fig. 10: einen Ausschnitt eines Stößels und dessen Kopf aufnehmender Dichtung.

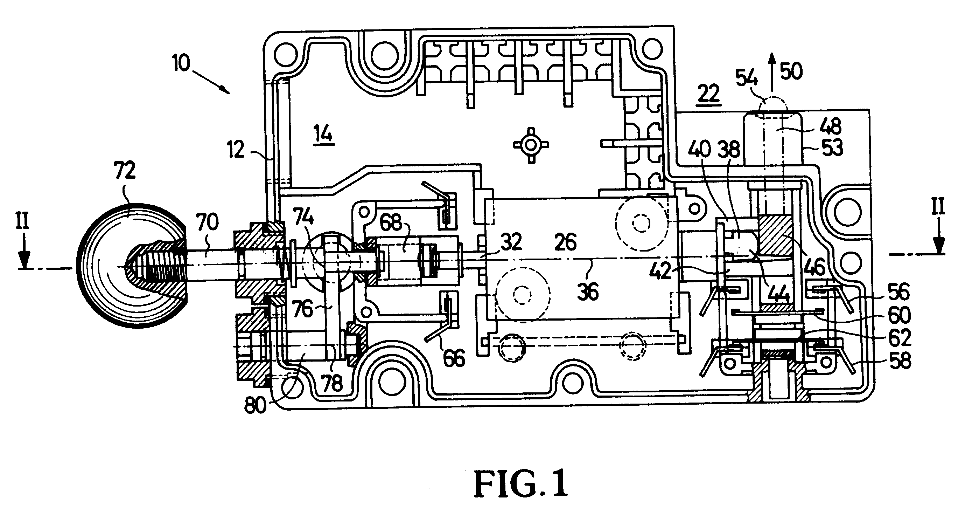

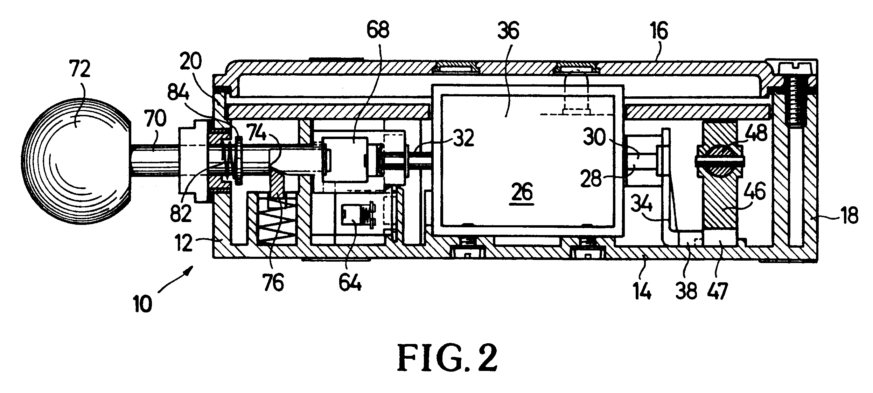

In den Fig. 1 und 2 ist eine Verriegelungsvorrichtung (10) dargestellt, die ein Gehäuse (12) aus Kunststoff umfaßt, das im geschlossenen Zustand voll isoliert und öl- und wasserdicht aufgebaut ist. Von dem Gehäuse (12) ist in Fig. 1 eine Bodenwandung (14) und in der Fig. 2 zusätzlich eine Deckelplatte (16) dargestellt, die über Schraubelemente mit Seitenwandungen (18) und (20) verbunden sind, die gegebenenfalls einstückig mit der Bodenplatte (14) ausgebildet sind. Zwischen den lösbaren Wandungen befinden sich Dichtungen, die die Öl- und Wasserdichtheit gewährleisten.

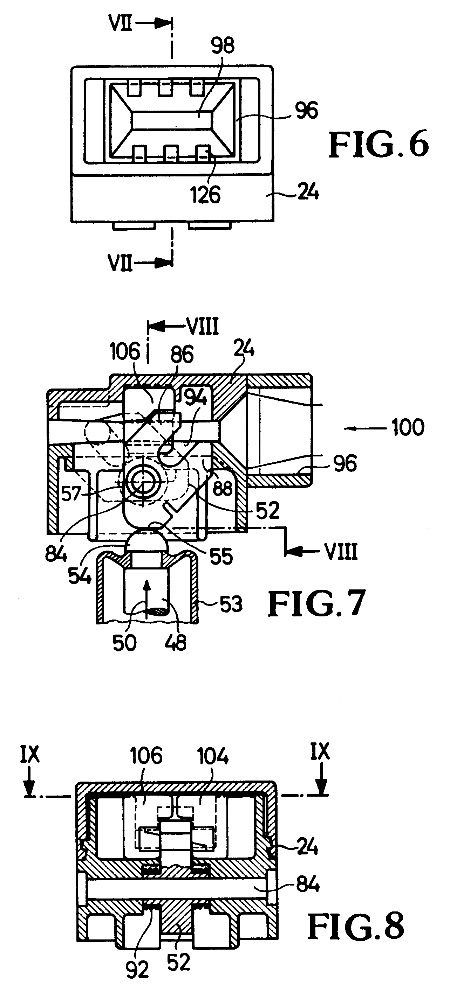

Das Gehäuse (12) weist eine etwa quaderförmige Aussparung (22) auf, in der ein Gehäusekopf schraubbar ist, wie er z.B. in den Fig. 6, 7 und 8 mit dem Bezugszeichen (24) bezeichnet ist. Dabei ist der Gehäusekopf (24) in drei um 90° zueinander versetzten Positionen anordbar.

In dem Gehäuse (12) befindet sich ein Elektromagnet, vorzugsweise Gleichstrommagnet (26) mit Anker (28), dessen aus dem Elektromagneten (26) heraustauchende Enden mit den Bezugszeichen (30) und (32) versehen sind. Das Ankerende (30) ist mit einem Winkelelement (34) verbunden, dessen parallel zur Längsachse (36) des Ankers (28) verlaufender vorzugsweise kürzerer Schenkel (38) entlang der Bodenfläche (14) verschiebbar ist. Dabei ist der die Funktion eines Sperrschiebers aufweisende Schenkel (38) seitlich von von der Bodenfläche (14) abragenden Stegen (40) und (42) geführt.

Der Kopf (44) des von dem Ankerabschnitt (30) ausgehenden Sperrschiebers (38) kann in Abhängigkeit von der Stellung des Ankers (30) in eine senkrecht zur Achse (36) verlaufendes vorzugsweise aus Kunststoff bestehendes Halteelement wie Halterung (46) eingreifen, die ihrerseits einen Stößel (48) aufnimmt, der senkrecht zur Achse (36) und parallel zur Bodenfläche (14) verschiebbar ist. Die Halterung (46) wird von nicht näher bezeichneten Führungsstegen aufgenommen und steht unter einer Federvorspannung, durch die die Halterung (46) und damit der Stößel (48) bestrebt ist, in Richtung des Pfeils (50) aus dem Gehäuse (12) in den im Zusammenhang mit den Fig. 6 bis 8 näher zu beschreibenden Gehäusekopf (24) bewegt zu werden und mit einem in diesem exzentrisch gelagerten Stellglied (52) oder Umlenkteil in Wechselwirkung zu treten.

Der vorzugsweise aus Stahl bestehende Stößel weist eine Länge derart auf, daß sein dem Gehäusekopf (24) abgewandtes Ende in z.B. einem Lagerauge in der dem Gehäusekopf (24) gegenüberliegenden Seitenwandung verschiebbar aufgenommen ist, um die Halterung (46) in axialer Richtung des Stößels (48) zu führen. Ebenfalls durchdringt der Stößel (48) im Bereich seines vorderen dem kugelförmig ausgebildeten Stößelkopf (54) zugewandten Ende die Gehäusewandung, auf der der Gehäusekopf (24) in verschiedenen Positionen anordbar ist. Der Stößel (48) ist von einem Dichtungsbalg (53) umgeben, um das Gehäuseinnere gegen z.B. eindringende Flüssigkeiten zu schützen. Der Dichtungsbalg (53) hat dabei Zylinderform und umschließt den Stößel (48) unterhalb seines Kopfes (54). Dabei ist eine umlaufende Nut vorgesehen, in die der Rand des Dichtungsbalgs (53) festgelegt ist. Das andere Ende des Dichtungsbalgs (53) ist am Gehäuse (12) oder in der Stößelöffnung festgelegt.

In dem Verschiebeweg der Halterung (46) und damit des Stößels (48) sind Überwachungsschalter (56) und (58) angeordnet, die mittels Überbrückungskontakte (60) und (62) in Abhängigkeit von der Stößelstellung (48) geöffnet oder geschlossen sind.

Von dem Ankerabschnitt (32) geht versetzt zu dessen Längsachse (36) eine Kontaktbrücke (64) aus, die in Abhängigkeit von der Stellung des Ankers (28) die Kontakte eines Schalters (66) öffnet oder schließt, um die Funktion des Magneten (26) überwachen zu können. Ferner geht von dem Ankerabschnitt (32) vorzugsweise über eine schwimmende Verbindung (68) ein Zugelement wie Zugstange (70) aus, die gehäuseaußenseitig eine Handhabe (72) aufweist. Die Zugstange (70) mit der Handhabe (72) dient als Notentriegelung, um den Anker (28) und damit den Sperrschieber (38) von dem Stößel (48) wegziehen zu können.

Die Zugstange (70) weist eine Raste wie einen Absatz oder eine Aussparung (74) auf, in die ein federvorgespanntes Rastelement (76) dann eingreift, wenn die als Notentriegelung dienende Handhabe (72) betätigt worden ist. Wird die Handhabe (72) nach einer Notentriegelung wieder losgelassen, so gelangt sie nicht in ihre Grundstellung zurück, da daß Rastelement (76) in den Absatz bzw. in die Aussparung (74) eingreift. In diesem Fall kann die Kontaktbrücke (64) den Schalter (66) nicht schließen, so daß der von der Verriegelungsvorrichtung (10) gesteuerte Stromkreis zum Betätigen einer Maschine oder Vorrichtung unterbrochen ist. Das Rastelement (76) ist als ein um eine Achse (78), die parallel zu der Längsachse der Zugstange und damit des Ankers (28) verläuft, drehbar. Hierzu geht der mit der Zugstange (70) wechselwirkende als Rastelement (76) zu bezeichnende Abschnitt in einen gehäuseaußenseitig von einem Spezialwerkzeug erfassenden Drehhebel (80) über. Erst durch Betätigen des Drehhebels (80) gelangt das Rastelement in Ausgriff mit der Zugstange (70), so daß diese in die Grundposition, also in Richtung des Magneten (26) durch ein Federelement (72) bewegt wird, das zwischen der Seitenwandung (14) und einem die Zugstange (70) umgebenden Ring wie Flansch (84) festgegelegt ist.

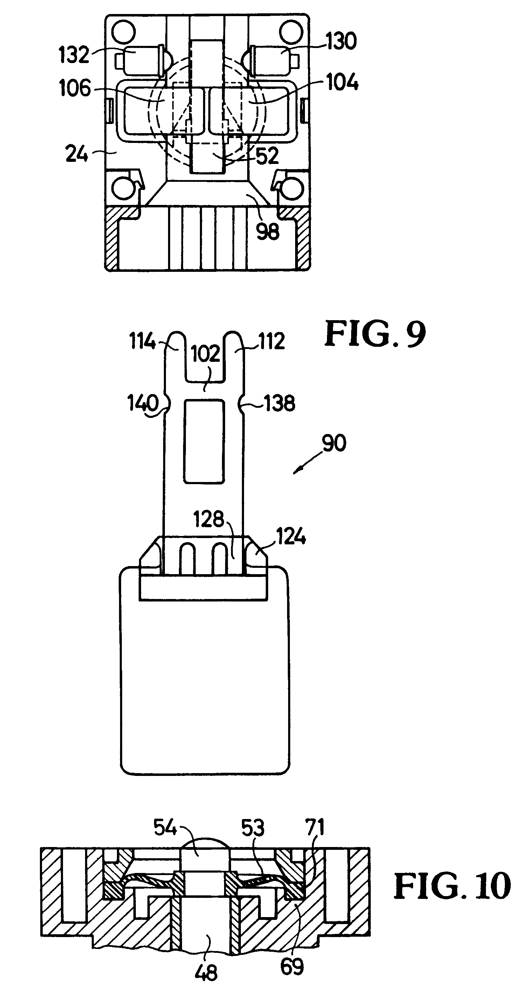

Im Bereich der Gehäuseaussparung (22) wird der Gehäusekopf (24) festgeschraubt, der das Stellglied (52) aufweist, das ein U-förmig ausgebildeter exzentrisch gelagerter Hebel ist, der um eine Achse (84) schwenkbar ist. Die Enden der Schenkel sind als Rastnasen (86) und (88) ausgebildet, die mit einem z.B. in der Fig. 9 dargestellten als Schlüssel wirkenden Betätigungsorgan (90) wechselwirken. Das Exzenterstellglied (52) wird z.B. von einer Drehfeder (92) in der in Fig. 7 dargestellten Stellung gehalten, d.h., daß die Schenkelöffnung (94) einer Kopfgehäuseöffnung (96) zugewandt ist, die in einen Kanal oder Schlitz (98) übergeht, in den das Betätigungsorgan (90) einschiebbar ist. Der Stößelkopf (54) liegt an der Außenfläche des Stellglieds (52) an. In Abhängigkeit von der Stellung des Stellglieds (52) befindet sich der Stößel (48) in unterschiedlichen Positionen.

In der von dem Betätigungsorgan (90) nicht beeinflußten Stellung nimmt das Stellglied (52) die in der Fig. 7 durch durchgezogene Linien dargestellte Position ein. In diesem Fall ist der Stößel (48) entgegen der Kraft der nicht dargestellten Feder in das Innere des Gehäuses (12) gedrückt, so daß der Schalter (56) zwangsweise geöffnet ist. Gleichzeitig ist über die Kontaktbrücke (62) der Überwachungsschalter (58) geschlossen. Der Sperrschieber (38) mit seinem Kopf (44) liegt an der Außenfläche der Halterung (46) für den Stößel (48) an. Der Sperrhebel (38) bewirkt keine Verriegelung, da der Stößel (48) in Pfeilrichtung (50) bewegbar ist. Wird nun in Richtung des Pfeils (100) das Betätigungsorgan (90) in den Schlitz (98) eingeführt, so ergreift der Steg (102) die Nase (86), so daß das Stellglied (52) in die gestrichelte Position umgelenkt wird. Da der Stößel (48) aufgrund der auf diesen wirkenden Federkraft an der Außenfläche -und zwar von der Fläche (55) zu der vorzugsweise senkrecht oder im wesentlichen senkrecht hierzu verlaufenden Fläche (57)- des Stellglieds (52) entlanggleitet, wird der Stößel (48) in Richtung des Pfeils (50) aus dem Gehäuse (12) bewegt. In diesem Fall kann der Sperrschieberkopf (44) in eine in der Halterung (46) zugeordnete Ausnehmung (47) formschlüssig eingreifen, so daß eine Verriegelung erfolgt, die verhindert, daß der Stößel (48) weiterbewegt werden kann. Dies bedeutet gleichzeitig, daß das Stellglied (52) aufgrund des Anliegens des Stößelkopfes (54) an seiner Außenfläche nicht mehr verschwenkt werden kann, so daß das Betätigungsorgan oder der Schlüssel (90) nicht mehr aus dem Schlitz (98) herausziehbar ist, da der Steg (102) von der Rastnase (98) festgelegt ist. Ein mit dem Betätigungsorgan (90) verbundenes Gitter oder eine Tür kann folglich nicht mehr geöffnet werden.

Durch die eine Stufe bildenden Flächen (55) und (57) nimmt das Stellglied (52) stets eine von zwei Endpositionen ein, die definierten Zuständen -einem geschlossenen oder geöffneten- des Positionsschalters (56) entsprechen.

Das vorzugsweise aus Metall bestehende Umlenkteil oder Stellglied (52) wird nicht nur von der Drehfeder (92) in der durchgezogenen Position, in der der Stößel (48) nicht blockiert ist, sondern zusätzlich von zwei Sperrschiebern (104) und (106) gehalten, die die Rastnase (86) erfassen.

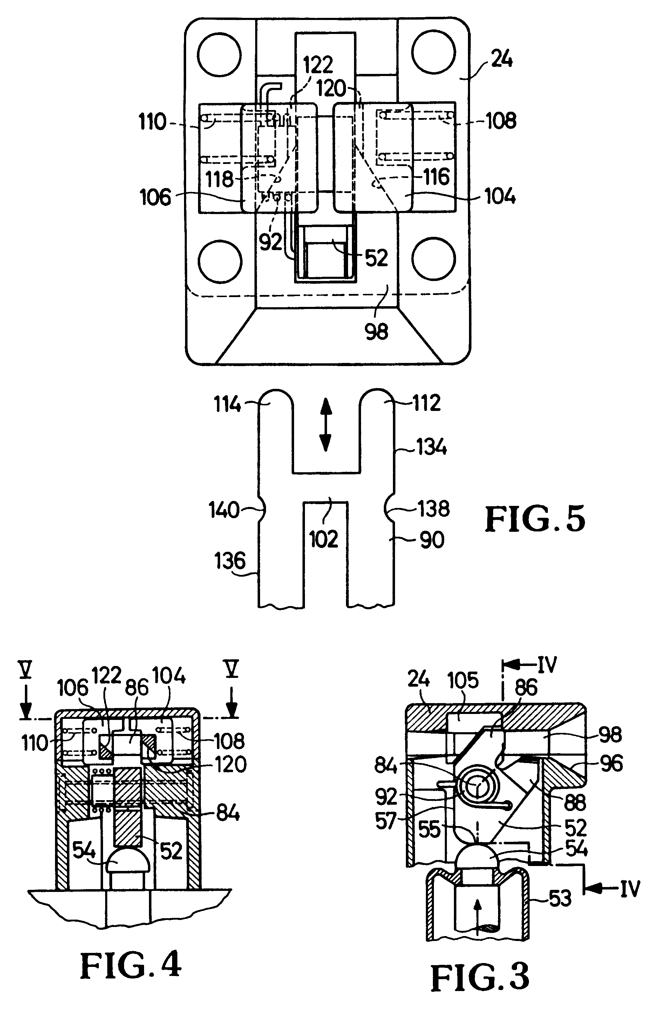

Nähere Einzelheiten der Sperrschieber (104) und (106) sind den Fig. 3 bis 5 vom prinzipiellen Aufbau her zu entnehmen.

Wie insbesondere Fig. 4 verdeutlicht, werden die Sperrschieber (104) und (106) von jeweils einer Druckfeder (108) und (107) gegen das Stellglied (52) bzw. in dessen Sperrfunktion (gestrichelte Darstellung in Fig. 7) über dessen Rastnase (86) gehalten. Die Sperrschieber (104) und (106) sind zu dem Zweck vorgesehen, daß das Stellglied (52) und damit der Stößel (48) und die über deren Halterung (46) damit verbundenen Schalter (56) bzw. (58) nicht durch unbefugte Manipulation mit einfachen Mitteln wie z.B. Blechstreifen oder Drahtstücken betätigt und damit die Verriegelungsvorrichtung (10) außer Kraft gesetzt werden kann. Die Funktion der Sperrschieber (104) und (106) wird an Hand der Fig. 5 besonders deutlich. Das Betätigungsorgan (90), von dem nur der als Bart zu bezeichnende und eine Schaltfunktion ausübende Teil dargestellt ist, wird in den Schlitz (98) eingeschoben und stößt mit den abgerundeten Längsstegen (112) und (114) gegen aufeinanderzulaufende Schrägflächen (116) und (118) an den Innenseiten der Sperrschieber (104) und (106), wodurch diese gegen die Kraft der Federn (108) und (110) auseinandergedrückt werden, so daß das Stellglied (52) freigegeben wird. Das Stellglied (52), d.h. die Rastnase (86) wird dann in zuvor beschriebener Weise von dem Quersteg (102) erfaßt, so daß ein Verdrehen um die Achse (84) um etwa 90° erfolgt. Der Stößel (48) gelangt dann entsprechend der Richtung des Pfeils (50) in eine angehobene Position, um zum einen den Schalter (60) zu schließen und zum anderen um die formschlüssige Verbindung zwischen dem Stößelkopf (44) und der Aussparung (47) herzustellen. Es wird die Verriegelungsposition angezeigt. Ein Herausziehen des Betätigungsorgans (90) ist nicht möglich, da ein Drehen des Stellgliedes (52) in die ausgezogene Position unterbunden ist, da der Stößel (48) durch den Sperrschieber (38) festgelegt ist. Erst wenn der Sperrschieber entweder durch Strombeaufschlagung (Federkraft-Verriegelung) des Magneten aus der Aussparung (47) herausgezogen oder bei stromlos gewordenem Magneten (Magnetkraft-Verriegelung) durch eine den Ankerabschnitt (32) umgebende Feder zurückgezogen wird, kann beim Herausziehen des Betätigungsorgans (90) entgegen der Richtung des Pfeils (100) das Stellglied (52) zurückverschwenkt werden, wodurch der Schalter (56) geöffnet und der Schalter (58) geschlossen wird. Bei geöffnetem Schalter (58) wird der Schalter (66) geschlossen.

Bei magnetkraftverriegelter Ausführungsform ist erwähntermaßen der Ankerabschnitt (32) von einem bei stromlosem Magneten den Anker (28) in der Zeichnung nach links verschiebenden Federelement umgeben, wohingegen bei der federkraftverriegelten Variante der Ankerabschnitt (30) von einem Federelement umfaßt ist, durch das der Anker und damit der Sperrschieber (34) bestrebt ist, in Richtung des Stößels und damit der Aussparung (47) in der Halterung (46) bewegt zu werden. Bei der nicht dargestellten Feder kann es sich um eine Sicherheitsschraubenfeder handeln, die den Ankerabschnitt (30) oder ein mit diesem verbundenes Element konzentrisch umgibt, wobei der Abstand der Federwindungen kleiner ist als der Drahtdurchmesser, so daß bei einem eventuellen Federbruch sichergestellt ist, daß die Federfunktion aufrechterhalten bleibt. Die Ausbildung entsprechender Federn bzw. deren Anordnung sowohl bei der Federkraft- als auch der Magnetkraft-Verriegelung sind dem Stand der Technik wie z.B. der DE-A-34 44 325 hinreichend zu entnehmen. Gleiches gilt vom Prinzip her bezüglich des den Stromkreis für die Betätigung einer Maschine bzw. einer Vorrichtung steuernden Schalter (56), (58) und (66).

Auf weitere besonders hervorzuhebende Merkmale in den Fig. soll nachstehend hingewiesen werden.

Eine besondere Form der Sperrschieber (104) und (106) ist aus den Fig. 4 und 5 ersichtlich. So sind die aufeinanderzulaufenden Schrägflächen (116) und (118) im hinteren Bereich parallel verlaufend zur Schlüsseleinschubrichtung schräg ausgebildet, und zwar weist der in Fig. 4 dargestellte rechte Sperrschieber (104) eine untere Abschrägung (120) und der Schieber (106) eine obere Abschrägung (122) auf, die als vorteilhaftes und wichtiges Merkmal die Sicherheit des Verriegelungsschalters gegen unbefugte Manipulation mit Draht, Klammern oder anderen derartigen Gegenständen wesentlich erhöht. So ist es z.B. nicht mehr möglich, die Verriegelung bzw. den Schaltvorgang des Stellglied (52) mittels einer Büroklammer zu bewerkstelligen.

Ebenfalls aus Gründen der Manipulationssicherheit sind die Eintrittsöffnung (96) und der bei eingeschlobenem Betätigungsorgan (90) in diesem Bereich sich befindliche Bartansatz durch eine besondere Formgebung aufeinander angepaßt. So kann die als Trichter ausgebildete Öffnung (96) Nocken oder Vorsprünge (126) aufweisen, denen entsprechende Aussparungen (128) im Bereich des Bartansatzes zugeordnet sind. Die durch die Vorsprünge bzw. Aussparungen (126) und (128) gebildete Struktur, die z.B. auch durch Stifte, Bohrungen oder ähnliches erzielt werden können, stellt sicher, daß nicht ein beliebiges Betätigungsorgan (90) in den Schlitz (98) eingeführt werden kann, um die erfindungsgemäße Verriegelungsvorrichtung (10) zu umgehen.

Schließlich ist durch im Einlaufkanal (98) angeordnete sich in den Verschiebeweg des Betätigungsorgans (90) erstreckende federvorgespannte Elemente in Form von vorzugsweise Kugelschnappern (130) und (132) die Möglichkeit gegeben, den Schlüssel (90) zu fixieren. Hierzu sind in den Seitenrändern (134) und (136) des Betätigungsorgans oder Schlüssels (90) Einbuchtungen (138) und (140) vorgesehen, die den vorspringenden Teilen der Kugelschnapper (130) und (132) angepaßt sind. Durch diese Schlüsselfixierung ist insbesondere bei einer Magnetkraft-Verriegelung der Vorteil gegeben, daß für den Fall, daß der Magnet nicht unmittelbar nach Einrasten des Schlüssels aktiviert wird, ausgeschlossen wird, daß der Sperrschieber (38) bei eingeschobenem Betätigungsorgan (90) nicht in die zugeordnete Blockierausnehmung (47) des Stößels bzw. der diesen aufnehmenden Halterung (46) gelangt, da die Magnetkraft nicht so groß ist, daß der Stößel selbstätig in die Rastposition gebracht wird.

Fig. 10 ist eine Detaildarstellung des Stößels (48), und zwar in bezug auf den den Stößelkopf (54) umfassenden Dichtungsbalg (53). Der Dichtungsbalg (53) ist tellerförmig ausgebildet und mit seinem äußeren Rand (71) in einer Nut (69) festgelegt. Außenseitig wird der Rand (71) von einem hohlzylinderförmigen Element gehalten.

## Patentansprüche

1. Verriegelungsvorrichtung (10), insbesondere ein Sicherheitsverriegelungsschalter, umfassend einen Magneten (26) mit einem auf ein als Stellglied (52) ausgebildetes Verriegelungselement einwirkenden Anker (28) und einem einen Positionsschalter (56) betätigenden einen Stößelkopf aufweisenden Stößel (48), der mit dem Stellglied (52) wechselwirkt und in Abhängigkeit von dessen Stellung den Positionsschalter geschlossen oder geöffnet hält, wobei das Stellglied (52) durch ein in einen Schlitz (98) eines das Stellglied (52) zumindest teilweise aufnehmenden Gehäusekopfes (24) verschiebbares Betätigungsorgan (90) positionsveränderbar ist und wobei das Stellglied (52) ein zwei stationäre Endpositionen einnehmbares exzentrisch gelagertes und zwei zueinander beabstandete Rastnasen (86, 88) aufweisendes Umlenkteil mit zwei gegeneinander geneigten Anlageflächen (55, 57) für den Stößelkopf ist, wobei der Stößel (48) von einem den Magneten (26) und den Positionsschalter (56) aufnehmenden Gehäuse (12) ausgeht,
**dadurch gekennzeichnet,**
daß der Stößel (48) von einem verschiebbar angeordneten Aufnahmeelement (46) ausgeht, das eine Ausnehmung (47) aufweist, in die ein Sperrschieber (38) zum Blockieren einer Stößelbewegung formschlüssig einbringbar ist, und wobei die Schiebeachse des Sperrschiebers versetzt zu der Ankerlängsachse (36) verläuft.

2. Verriegelungsvorrichtung nach Anspruch 1,
**dadurch gekennzeichnet**,
daß das Aufnahmeelement die Halterung (46) ein vorzugsweise aus Kunststoff bestehendes quaderförmiges parallel zu einer Innenfläche (14) des Gehäuses (12), vorzugsweise zu dem Gehäuseboden verschiebbares Element ist, das von dem vorzugsweise in Gehäusewandabschnitten geführten Stößel (38) durchsetzt ist.

3. Verriegelungsvorrichtung nach Anspruch 1,
**dadurch gekennzeichnet**,
daß der Sperrschieber (38) mit dem Anker (28) über ein Winkelelement (34) verbunden ist, dessen einer Schenkel der Sperrschieber (38) ist und seitlich geführt entlang der Innenfläche wie Gehäuseboden (14) verschiebbar ist.

4. Verriegelungsvorrichtung nach Anspruch 1,
**dadurch gekennzeichnet**,
daß von dem dem Sperrschieber (38) abgewandten Ankerabschnitt (32) eine Nothandhabe (70, 72) ausgeht, über die der Anker (28) aus der Ausnehmung (47) des den Sperrschieber (38) formschlüssig aufnehmenden Aufnahmeelementes (46) entfernbar ist, und daß ein Abschnitt (70) der Nothandhabe mit einem Rastelement (76) wechselwirkt, das bei Betätigen der Nothandhabe diese in einer den Anker in einer von der Ausnehmung (47) entfernten Position hält.

5. Verriegelungsvorrichtung nach Anspruch 4,
**dadurch gekennzeichnet**,
daß das Rastelement (76) wie Rastnase ein in Richtung der Notlaufhandhabe (70) federvorgespanntes in eine Raste wie Aussparung oder an eine Stufe (74) der Nothandhabe eingreifendes Element ist, das über ein Werkzeug aus der Raste entfernbar ist.

6. Verriegelungsvorrichtung nach Anspruch 5,
**dadurch gekennzeichnet,**
daß das federvorgespannte Rastelement (76) von einem um einen parallel zur Längsachse der Handhabe (70) verschwenkbaren Schwenkarm (80) ausgeht, der in Abschnitten des Gehäuses (10, 12) festgelegt ist.

7. Verriegelungsvorrichtung nach Anspruch 4,
**dadurch gekennzeichnet,**
daß der Ankerabschnitt (32) und der zugeordnete Abschnitt (70) der Nothandhabe schwimmend verbunden sind.

8. Verriegelungsvorrichtung nach Anspruch 1,
**dadurch gekennzeichnet,**
daß das U-förmig ausgebildete und exzentrisch gelagerte Stellglied (52) zumindest von einem parallel zur Schwenkachse des Stellgliedes verschiebbaren unter Federspannung in Richtung des Stellgliedes stehenden Sperrelement (104, 106) erfaßbar ist, das eine zur Schlitzöffnung (96) des Gehäusekopfes (24) hin gerichtete Schrägfläche (116, 118) aufweist, entlang der das Betätigungsorgan (90) derart gleitet, daß das Sperrelement aus dem Schwenkweg des Stellgliedes entfernbar ist.

9. Verriegelungsvorrichtung nach Anspruch 8,
**dadurch gekennzeichnet,**
daß zwei jeweils an gegenüberliegenden Seiten des Schlitzes (98) in den Schwenkweg verschiebbare Sperrelemente wie Sperrschieber (104, 106) den in bezug auf die Entrittsöffnung (96) des Gehäusekopfes (24) hinteren als Rastnase dienenden Schaltgliedschenkel (86) erfassen, daß die Schrägflächen (116, 118) der Sperrelemente aufeinanderzulaufen und daß die Schrägflächen in ihren jeweiligen hinteren Bereichen parallelverlaufend zur Richtung der Betätigungsorganbewegung Abschrägungen (120, 122) aufweisen, wobei die Abschrägungen (120, 122) vorzugsweise an diametral gegenüberliegenden Bereichen der Sperrelemente (104, 106) verlaufen.

10. Verriegelungsvorrichtung nach Anspruch 1,
**dadurch gekennzeichnet,**
daß das das Stellglied (52) um eine senkrecht zur Stößellängsachse verlaufende Achse (84) verschwenkende Betätigungsorgan (90) innerhalb des Schlitzes (98) vorzugsweise durch z. B. federvorgespannte Kugelelemente (130, 132) lagefixierbar ist.

11. Verriegelungsvorrichtung nach Anspruch 1,
**dadurch gekennzeichnet,**
daß das Betätigungsorgan (90) einen keilförmig ausgebildeten in die trichterförmige Schlitzöffnung (96) einpaßbaren Absatz wie Bartansatz (124) aufweist, wobei der Abschnitt und die Schlitzöffnung einander ergänzende vorzugsweise durch Vorsprünge und Vertiefungen gebildete Strukturen aufweisen.

12. Verriegelungsvorrichtung nach Anspruch 1,
**dadurch gekennzeichnet,**
daß das Gehäuse (12) aus Kunststoff und voll isoliert und öl- und wasserdicht ausgebildet ist.

13. Verriegelungsvorrichtung nach Anspruch 1,
**dadurch gekennzeichnet,**
daß der Stößel (48) gegenüber dem Gehäuse (12) mittels eines Dichtungsbalgs (53) öl- und wasserdicht abgedichtet ist.

## Claims

1. A locking device (10), more particularly a safety locking switch, comprising a magnet (26) with an armature (28) acting upon a locking element constructed as an adjusting element (52) and a pushrod (48), which actuates a position switch (56), comprises a pushrod head, cooperates with the adjusting element (52) and depending on the position of the adjusting element holds the position switch open or closed, the adjusting element (52) being variable in its position by means of an actuating member (90) displaceable in a slot (98) in a housing head (24) at least partially accommodating the adjusting element (52) and the adjusting element (52) being an eccentrically mounted reversing element, which can adopt two stationary end positions and comprises two spaced locking noses (86, 88) and two bearing surfaces (55, 57) inclined relative to one another for the pushrod head, the pushrod (48) extending from a housing (12) accommodating the magnet (26) and the position switch (56), characterised in that the pushrod (48) extends from a displaceably arranged receiving element (46) comprising a recess (47), in which a locking slide element (38) can be engaged in a positive-locking manner in order to block a pushrod movement, and the slide axis of the locking slide element extends offset relative to the longitudinal axis (36) of the armature.

2. A locking device according to claim 1, characterised in that the receiving element or holder (46) is a square-shaped element preferably made of plastics material, which can be displaced parallel to an internal surface (14) of the housing (12), preferably the housing base, and is penetrated by the pushrod (48) preferably guided in housing wall sections.

3. A locking device according to claim 1, characterised in that the locking slide element (38) is connected to the armature (28) via an angle element (34), one of whose limbs forms the locking slide element (38) and is laterally guided so as to slide along the internal surface or housing base (14).

4. A locking device according to claim 1, characterised in that an emergency handle (70, 72) extends from the armature section (32) remote from the locking slide element (38), by means of which emergency handle the armature (28) can be removed from the recess (47) of the receiving element (46) accommodating the locking slide element (38) in a positive-locking manner, and one section (70) of the emergency handle cooperates with a locking member (76), which when the emergency handle is actuated holds the armature in a position remote from the recess (47).

5. A locking device according to claim 4, characterised in that the locking member (76) or locking nose is an element which is spring-loaded in the direction of the emergency handle (70), engages in a locking recess or a step (74) in the emergency handle and can be removed from the locking recess by means of a tool.

6. A locking device according to claim 5, characterised in that the spring-loading locking member (76) extends from a swivel arm (80), which can be swivelled about an axis parallel to the longitudinal axis of the handle (70) and is mounted in sections of the housing (10, 12).

7. A locking device according to claim 4, characterised in that the armature section (32) and the associated section (70) of the emergency handle are connected in a suspended manner.

8. A locking device according to claim 1, characterised in that the U-shaped and eccentrically mounted adjusting element (52) can be grasped at least by a locking element (104, 106), which is displaceable parallel to the pivot axis of the adjusting element, is spring-loaded in the direction of the adjusting element and comprises an inclined surface (116, 118), which faces the slotted opening (96) of the housing head (24) and along which the actuating member (90) slides in such a manner that the locking element can be moved out of the pivoting path of the adjusting element.

9. A locking device according to claim 8, characterised in that two locking elements or locking slide elements (104, 106), which are displaceable on opposite sides of the slot (98) into the pivoting path, grasp the rear switching element limb (86) in relation to the inlet opening (96) of the housing head (24) acting as a locking nose, the inclined surfaces (116, 118) of the locking elements converge and in their respective rear regions comprise bevels (120, 122) extending parallel to the direction of movement of the actuating member, the bevels (120, 122) preferably extending on diametrally opposed areas of the locking elements (104, 106).

10. A locking device according to claim 1, characterised in that the actuating member (90) pivoting the adjusting element (52) about an axis (84) extending perpendicular to the longitudinal axis of the pushrod can be locked in position within the slot (98), preferably by means of ball elements (130, 132) which are spring-loaded for example.

11. A locking device according to claim 1, characterised in that the actuating member (90) comprises a wedge-shaped shoulder or fin attachment (124), which can be fitted into the funnel-shaped slotted opening (96), the attachment and the slotted opening comprising complementary structures, preferably formed by projections and recesses.

12. A locking device according to claim 1, characterised in that the housing (12) is made of plastics material and is fully insulated and oil and waterproof.

13. A locking device according to claim 1, characterised in that the pushrod (48) is sealed in an oil and waterproof manner relative to the housing (12) by means of sealing bellows (53).

## Revendications

1. Dispositif de verrouillage (10), notamment pour un commutateur de verrouillage de sécurité, comprenant un aimant (26) avec un induit (28) agissant sur l'élément de verrouillage en forme d'organe de réglage (52) et comportant un poussoir (48) avec une tête de poussoir actionnant un commutateur de position (56) qui coopère avec l'organe de réglage (52) et maintient le commutateur de position fermé ou ouvert en fonction de sa position, l'organe de réglage (52) pouvant être changé de place par un organe de manoeuvre (90) coulissant dans une fente (98) d'une tête de boîtier (24) recevant au moins partiellement l'organe de réglage (52) et cet organe de réglage (52) est une pièce de renvoi montée de manière excentrée, susceptible de prendre deux positions de fin de course et ayant deux becs d'accrochage (86, 88) écartés l'un de l'autre, avec deux surfaces d'appui (55, 57) inclinées l'une vers l'autre pour la tête de poussoir, le poussoir (48) sortant d'un boîtier (12) recevant l'aimant (26) et le commutateur de position (56), dispositif caractérisé en ce que le poussoir (48) part d'un élément de réception (46) monté coulissant et ayant une cavité (47) dans laquelle peut venir un verrou (38) par une liaison par la forme pour bloquer le mouvement du poussoir et l'axe de coulissement du verrou est décalé par rapport à l'axe longitudinal (36) de l'induit.

2. Dispositif de verrouillage selon la revendication 1, caractérisé en ce que l'élément de réception et de fixation (46) est un élément de forme parallélépipédique, de préférence en matière plastique, coulissant parallèlement à une surface intérieure (14) du boîtier (12), de préférence par rapport au fond du boîtier, cet élément étant traversé par le poussoir (38), de préférence guidé dans des segments de paroi du boîtier.

3. Dispositif de verrouillage selon la revendication 1, caractérisé en ce que le verrou (38) est relié à l'induit (28) par une équerre (34) dont une branche est le verrou (38) et qui peut coulisser en étant guidé latéralement, le long de la surface intérieure, par exemple le fond (14) du boîtier.

4. Dispositif de verrouillage selon la revendication 1, caractérisé en ce qu'une poignée de secours (70, 72) est reliée au segment d'induit (32) opposé au verrou (38), cette poignée permettant de dégager l'induit (28) de la cavité (47) de l'élément de réception (46) qui reçoit, par une liaison par la forme, le verrou (38) et en ce qu'un segment (70) de la poignée de secours coopère en alternance avec un élément d'accrochage (76) qui, lorsque la poignée de secours est actionnée, maintient l'induit dans une position éloignée de la cavité (47).

5. Dispositif de verrouillage selon la revendication 4, caractérisé en ce que l'élément d'accrochage (76) est un bec d'accrochage précontraint par ressort en direction de la poignée de secours (70) dans un moyen d'accrochage tel qu'une cavité ou venant prendre dans un échelon (74) de la poignée de secours et qui peut être dégagé de son accrochage à l'aide d'un outil.

6. Dispositif de verrouillage selon la revendication 5, caractérisé en ce que l'élément d'accrochage (76), précontraint par ressort, part d'un bras pivotant (80) susceptible de pivoter parallèlement à l'axe longitudinal de la poignée (70), ce bras étant fixé dans des segments du boîtier (10, 12).

7. Dispositif de verrouillage selon la revendication 4, caractérisé en ce que le segment d'induit (32) et le segment (70) correspondant de la poignée de secours sont reliés de manière flottante.

8. Dispositif de verrouillage selon la revendication 1, caractérisé en ce que l'organe de réglage (52) en forme de U, à montage excentré, peut être accroché par au moins un élément de verrouillage (104, 106) coulissant parallèlement à l'axe de pivotement de l'organe de réglage sous la tension d'un ressort en direction de l'organe de réglage, cet élément de verrouillage ayant une surface inclinée (116, 118) dirigée vers l'ouverture en forme de fente (96) de la tête de boîtier (24), surface le long de laquelle glisse l'organe de manoeuvre (90) pour que l'élément de verrouillage puisse être dégagé de la trajectoire de pivotement de l'organe de réglage.

9. Dispositif de verrouillage selon la revendication 8, caractérisé en ce que chaque fois sur deux côtés opposés de la fente (98), dans la trajectoire de pivotement, viennent prendre des éléments de verrouillage coulissants tels que des verrous (104, 106), la branche arrière (86) de l'organe de commutation (selon l'ouverture d'entrée (96) de la tête de boîtier (24)), dont l'arrière sert de bec d'accrochage, les surfaces inclinées (116, 118) des éléments de verrouillage se rejoignent, en ce que les surfaces inclinées présentent dans leur zone arrière respective, des surfaces inclinées (120, 122) parallèles, dirigées vers l'organe de manoeuvre, ces surfaces inclinées (120, 122) passent de préférence diamétralement sur les zones opposées des éléments de verrouillage (104, 106).

10. Dispositif de verrouillage selon la revendication 1, caractérisé en ce que l'organe de manoeuvre (90), qui bascule l'organe de réglage (52) autour d'un axe (84) perpendiculaire à l'axe longitudinal du poussoir, est maintenu fixe en position à l'intérieur de la fente (98), de préférence par des éléments à bille (130, 132) par exemple précontraints par ressort.

11. Dispositif de verrouillage selon la revendication 1, caractérisé en ce que l'organe de manoeuvre (90) présente un prolongement en forme de coin adapté à la forme de trémie de l'ouverture à fente (96), tel qu'un prolongement de barbe (124), le segment et l'ouverture de la fente ayant des structures complémentaires, de préférence formées de saillies et de cavités.

12. Dispositif de verrouillage selon la revendication 1, caractérisé en ce que le boîtier (12) est en matière plastique et est complètement isolé et étanche à l'huile et à l'eau.

13. Dispositif de verrouillage selon la revendication 1, caractérisé en ce que le poussoir (48) est fermé de manière étanche à l'huile et à l'eau par rapport au boîtier (12) à l'aide d'un revêtement d'étanchéité.
